# EUROPÄISCHE PATENTANMELDUNG

(11) **EP 2 433 830 A1**
(43) Veröffentlichungstag der Anmeldung: **28.03.2012**
(21) Anmeldenummer: 10181485.3
(22) Anmeldetag: 28.09.2010
(51) Int. Cl.: B60L 7/22, H02P 3/22, H02P 6/24

(54) **Verfahren und Steuerung zum Bereitstellen elektrischer Energie aus einer angetriebenen Drehstrom-Synchronmaschine**

(71) Anmelder: Brusa Elektronik AG, 9466 Sennwald (CH)
(72) Erfinder: Breu, Martin, 9437 Marbach (CH); Aktas, Ercan, 6900 Bregenz (AT)
(74) Vertreter: Patentbüro Paul Rosenich AG

(57) **Zusammenfassung**

Es wird ein Verfahren und eine Steuerung zum Bereitstellen elektrischer Energie aus einer angetriebene Drehstrom-Synchronmaschine (1) mit einem mehrphasigen Umrichter (2) angegeben, der obere Schalter (S1..S3) und untere Schalter (S4..S6) und wenigstens einen in oder an einem Zwischenkreis des Umrichters (2) angeordneten Zwischenkreis-Kondensator (C) umfasst. Durch einen aktiven Kurzschluss, bei dem alle oberen Schalter (S1..S3) oder alle unteren Schalter (S4..S6) geschlossen werden, wird bei einem abgeschleppten Kraftfahrzeug oder bei einem Fahrzeug, das fremd (hybrid oder am Rollenprüfstand) angetrieben wird oder ausrollt und/oder über keine einsatzfähige Zwischenkreisspannungsversorgung verfügt, ein sicherer Zustand herbeigeführt, bei dem hohe Spannungen (UC) im Zwischenkreis verhindert und Bremsmomente (M) reduziert werden.

## Beschreibung

Die Erfindung betrifft ein Verfahren zum Bereitstellen elektrischer Energie aus einer angetriebenen Drehstrom-Synchronmaschine mit einem mehrphasigen Umrichter, der obere Schalter und untere Schalter umfasst, zum Antrieb eines Fahrzeugs während und zum Herbeiführen eines sicheren Zustands, der durch die Verhinderung hoher Spannungen und die Reduktion des Bremsmoments herbeigeführt wurde, z.B. bei einem abgeschleppten Kraftfahrzeug oder bei einem Fahrzeug, das fremd angetrieben wird oder ausrollt und/oder über keine einsatzfähige Zwischenkreisspannungsversorgung verfügt, und wenigstens einen in oder an einem Zwischenkreis des Umrichters angeordneten Zwischenkreis-Kondensator umfasst. Weiterhin betrifft die Erfindung eine Steuerung für einen mehrphasigen Umrichter, der obere Schalter und untere Schalter sowie wenigstens einen in einem Zwischenkreis des Umrichters angeordneten Kondensator umfasst und an den eine Drehstrom-Synchronmaschine zum Antrieb eines Fahrzeugs angeschlossen ist, wobei die Steuerung zum Ansteuern des Umrichters vorgesehen ist derart, dass elektrische Energie aus der angetriebenen Drehstrom-Synchronmaschine während und zum Herbeiführen eines sicheren Zustands, der durch die Verhinderung hoher Spannungen und die Reduktion des Bremsmoments herbeigeführt wurde, z.B. bei einem abgeschleppten Kraftfahrzeug oder bei einem Fahrzeug, das fremd angetrieben wird oder ausrollt und/oder über keine einsatzfähige Zwischenkreisspannungsversorgung verfügt, bereitgestellt wird.

Elektrokraftfahrzeuge verfügen im Abschleppbetrieb häufig über keinerlei elektrische Energie, weil der Antriebsakkumulator leer beziehungsweise defekt ist und/oder aus Sicherheitsgründen vom Fahrzeugnetz getrennt wird. Oft umfassen solche Fahrzeuge auch keine Hilfsbatterie, welche - anders als dies zum Beispiel bei Benzin- oder Dieselgetriebenen Fahrzeugen der Fall ist - in so einem Betriebsfall wenigstens die wichtigsten elektrischen Verbraucher, zum Beispiel eine Warnblinkanlage oder eine Beleuchtung des Fahrzeugs, mit Energie versorgen könnten.

Zur Überwindung dieses Problems offenbart die DE 11 2007 000 678 T5 eine Abschleppeinrichtung für ein elektrisch betriebenes Kraftfahrzeug, bei dem elektrische Energie vom abschleppenden Fahrzeug auf das abgeschleppte Fahrzeug übertragen werden kann, um dort wichtige Verbraucher, wie zum Beispiel eine Servolenkung, zu versorgen.

Aufgabe der Erfindung ist es nun, ein verbessertes Verfahren und eine verbesserte Steuerung zum Bereitstellen elektrischer Energie anzugeben. Insbesondere soll ein abgeschlepptes, fremd angetriebenes, ausrollendes und/oder über keine einsatzfähige Zwischenkreisspannungsversorgung verfügendes Kraftfahrzeug mit elektrischer Energie versorgt werden.

Erfindungsgemäss wird diese Aufgabe durch ein Verfahren der eingangs genannten Art gelöst, umfassend die Schritte:
- Betreiben der Synchronmaschine im passiven Generatorbetrieb durch Öffnen aller Schalter des Umrichters,
- Aufladen des Zwischenkreiskondensators bis zu einem ersten Schwellwert einer Spannung im Zwischenkreis,
- Versorgen von elektrischen Verbrauchern des Fahrzeugs mit elektrischer Energie aus dem Zwischenkreiskondensator,
- Kurzschließen von Wicklungen der Synchronmaschine oberhalb eines zweiten höheren Schwellwerts durch automatisches Schliessen aller unteren Schalter oder aller oberen Schalter des Umrichters durch die Spannung im Zwischenkreis und
- automatisches Lösen des aktiven Kurzschlusses nach Unterschreiten des ersten Schwellwerts durch Öffnen der geschlossenen Schalter.

Die Aufgabe der Erfindung wird auch mit einer Steuerung der eingangs genannten Art gelöst, bei der
- die Synchronmaschine im passiven Generatorbetrieb durch Öffnen aller Schalter des Umrichters betrieben wird,
- der Zwischenkreiskondensator bis zu einem ersten Schwellwert einer Spannung im Zwischenkreis aufgeladen wird,
- elektrische Verbraucher des Fahrzeugs mit elektrischer Energie aus dem Zwischenkreiskondensator versorgt werden,
- Wicklungen der Synchronmaschine oberhalb eines zweiten höheren Schwellwerts durch automatisches Schliessen aller unteren Schalter oder aller oberen Schalter des Umrichters durch die Spannung im Zwischenkreis kurzgeschlossen werden und
- der aktive Kurzschluss nach Unterschreiten des ersten Schwellwerts durch Öffnen der geschlossenen Schalter automatisch gelöst wird.

Erfindungsgemäss wird damit erreicht, dass die in einem abgeschleppten, fremd angetriebenen, ausrollenden und/oder über keine einsatzfähige Zwischenkreisspannungsversorgung verfügenden Kraftfahrzeug benötigte elektrische Energie "vor Ort", d.h. direkt in dem besagten Fahrzeug, erzeugt wird und nicht von einem anderen Fahrzeug dorthin übertragen werden muss. Daher kann ein herkömmliches Abschleppseil auch unverändert für Elektrokraftfahrzeuge weiter verwendet werden. Zudem können Bedienungsfehler, wie sie beispielsweise bei der nach dem Stand der Technik nötigen Verkabelung erforderlich sind, ausgeschlossen werden, auch wenn die betroffenen Kraftfahrer den Abschleppvorgang nur selten ausführen und darin daher nur wenig geübt sind.

Ein weiterer Vorteil der Erfindung besteht unter anderem darin, dass durch das Vorsehen des Kurzschlusses Trenn-Schütze zur Drehstrom-Synchronmaschine, wie sie nach dem Stand der Technik erforderlich sind, eingespart werden können.

Schliesslich wird angemerkt, dass sich das erfindungsgemässe Verfahren beziehungsweise die erfindungsgemässe Steuerung - wenngleich diese im Zusammenhang mit Elektrokraftfahrzeugen vorteilhaft ist - auch anders angewendet werden kann, beispielsweise bei elektrisch betriebenen Booten, Schiffen und Flugzeugen.

Vorteilhafte Ausgestaltungen und Weiterbildungen der Erfindung ergeben sich aus den Unteransprüchen sowie aus der Beschreibung in der Zusammenschau mit den Figuren, bzw. sind durch sie geoffenbart.

Vorteilhaft ist es, wenn der Kurzschluss der Wicklungen der Drehstrommaschine unterhalb eines dritten Schwellwertes aufgehoben wird, welcher unterhalb des ersten Schwellwertes liegt. Auf diese Weise kann die Zwischenkreisspannung in einem Sollbereich um den ersten Schwellwert gehalten werden.

Günstig ist es, wenn die Wicklungen der Synchronmaschine gegen ein Massepotential kurzgeschlossen werden. Auf diese Weise können Störeinflüsse durch die zum Teil sehr hohen Kurzschlussströme auf spannungsführenden Teilen vermieden werden.

Günstig ist es weiterhin, wenn ein Stator der Synchronmaschine permanenterregt oder durch eine gesonderte Energiequelle fremderregt ist und Wicklungen eines Rotors kurzgeschlossen werden. Auf diese Weise kann der Stator der Synchronmaschine auch ohne aufwändige Apparaturen wie Schleifringe fremderregt werden. Die Fremderregung der Synchronmaschine ist somit technisch einfacher und weniger fehleranfällig.

Günstig ist es zudem, wenn ein Rotor der Synchronmaschine permanenterregt oder durch eine gesonderte Energiequelle fremderregt ist und Wicklungen eines Stators kurzgeschlossen werden. Auf diese Weise können die Wicklungen der Synchronmaschine ohne aufwändige Apparaturen wie Schleifringe kurzgeschlossen werden. Das Kurzschliessen der Wicklungen ist somit technisch einfacher und weniger fehleranfällig.

Vorteilhaft ist es, wenn als Verbraucher des Kraftfahrzeugs einer oder mehrere aus der Gruppe: Schaltelemente des Umrichters, eine Kühleinrichtung des Umrichters, eine Beleuchtungseinrichtung des Fahrzeugs, ein Lenkkraftverstärker und/oder ein Bremskraftverstärker vorgesehen ist/sind. Dies sind wichtige Einrichtungen eines Elektrokraftfahrzeugs, deren Funktion auch im Abschleppbetrieb von Vorteil ist. Ein solches Kraftfahrzeug ist daher besonders sicher.

Vorteilhaft ist es auch, wenn ein Akkumulator zum Betrieb des Kraftfahrzeugs von einem elektrischen Netz des Fahrzeugs getrennt wird. Auf diese Weise kann verhindert werden, dass ein Akkumulator Schaden nimmt oder im schlimmsten Fall explodiert, wenn in der elektrischen Anlage des Fahrzeugs ein Kurzschluss vorhanden ist oder droht beziehungsweise der Akkumulator selbst defekt ist. Mit Hilfe der Erfindung kann das Fahrzeug dennoch mit Strom versorgt werden, ohne aber das genannte Risiko eingehen zu müssen.

Besonders vorteilhaft ist es, wenn als erster Schwellwert der Zwischenkreisspannung 40 Volt und/oder als zweiter Schwellwert der Zwischenkreisspannung 60 Volt und/oder als dritter Schwellwert der Zwischenkreisspannung 20 Volt vorgesehen werden. Eine Spannung von 40V (erster Schwellwert) erweist sich für die meisten Verbraucher eines Elektrokraftfahrzeugs als günstig.

Bei gesunden erwachsenen Menschen geht man zudem ab einer Berührungsspannung von 120V Gleichspannung von einer lebensbedrohlichen Situation aus, bei Kindern und Nutztieren ist die Berührungsspannung nur auf maximal 60V Gleichspannung festgelegt. Wenn die Spannung im Zwischenkreis auf maximal 60V (zweiter Schwellwert) limitiert ist, können Menschen und Tiere vor einem gefährlichen Stromschlag geschützt werden, auch wenn beispielsweise eine Isolation zwischen Teilen, die berührt werden können, und dem elektrischen Netz des Fahrzeugs defekt ist.

Oberhalb einer Spannung von 20V (dritter Schwellwert) kann schliesslich ein sicherer Betrieb der Treiber für die Schalter des Umrichters gewährleistet werden.

An dieser Stelle wird darauf hingewiesen, dass sich die zum erfindungsgemässen Verfahren genannten Varianten und die sich daraus ergebenden Vorteile gleichermassen auf die erfindungsgemässe Steuerung beziehen und umgekehrt.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: eine schematische Darstellung einer aus einem Fahrzeugnetz über einen mehrphasigen Umrichter angetriebenen Drehstrom-Synchronmaschine und
- Fig. 2: zeitliche Verläufe ausgewählter Parameter während des Ablaufs des erfindungsgemässen Verfahrens.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen und gegebenenfalls unterschiedlichen Indizes versehen.

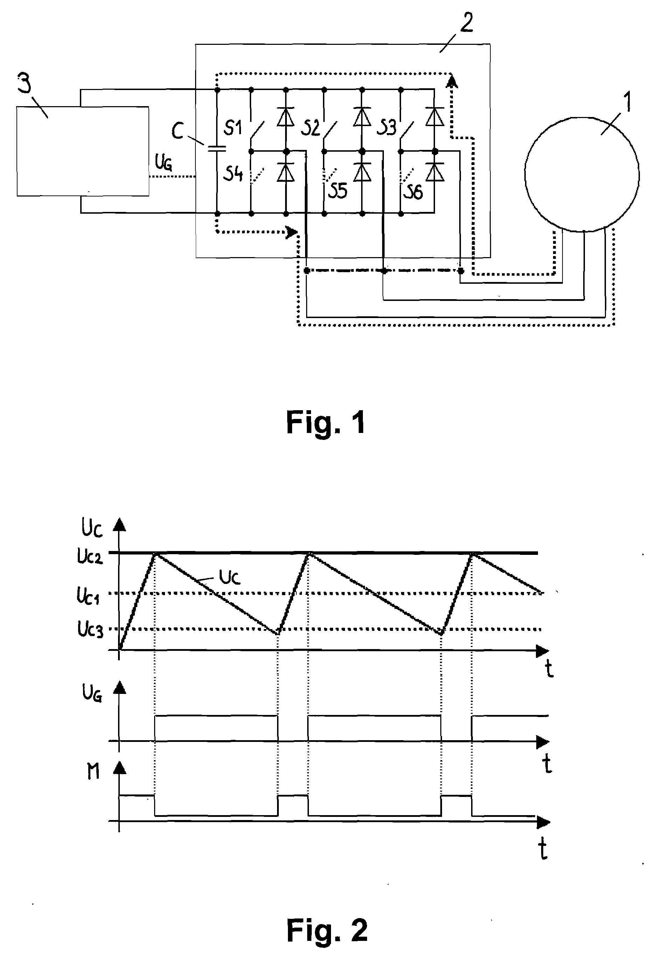

Fig. 1 zeigt eine schematische Darstellung einer aus einem Fahrzeugnetz 3 über einen mehrphasigen Umrichter 2 angetriebenen Drehstrom-Synchronmaschine 1. Der Umrichter 2 umfasst obere Schalter S1..S3 und untere Schalter S4..S6. Weiterhin ist in der Fig. 1 symbolisch eine Steuerleitung dargestellt, über die eine Steuerspannung UG an die Steuereingänge der Schalter S1..S2, bei denen es sich ja in aller Regel um Feldeffekttransistoren (FETs) oder Bipolartransistoren mit isolierter Gate-Elektrode (IGBTs) handelt, angelegt werden kann.

Die Funktion der in der Fig. 1 dargestellten Anordnung ist nun wie folgt, wobei auch auf die zeitlichen Verläufe ausgewählter Parameter wie in Fig. 2 dargestellt Bezug genommen wird:

Im Normalbetrieb wird das Fahrzeug in an sich bekannter Weise mit Hilfe der Drehstrom-Synchronmaschine 1, welche in diesem Betriebsfall als Motor wirkt und aus dem Fahrzeugnetz 3 beziehungsweise von einem Akkumulator versorgt wird, angetrieben.

Wird das Fahrzeug nicht aktiv über den Motor 1 angetrieben, so gibt es neben dem Stillstand des Fahrzeugs noch weitere Betriebsfälle, in denen sich das Fahrzeug oder zumindest dessen Räder auch ohne Zufuhr elektrischer Energie bewegen. Zum Beispiel ist dies bei einem abgeschleppten Kraftfahrzeug oder bei einem Fahrzeug, das fremd (hybrid oder am Rollenprüfstand) angetrieben wird oder ausrollt, der Fall.

Herkömmliche Fahrzeuge verfügen in diesem Fall häufig nicht über eine einsatzfähige Zwischenkreisspannungsversorgung, beispielsweise weil der Akkumulator leer, defekt und/oder aus Sicherheitsgründen vom Fahrzeugnetz 3 weggeschaltet/getrennt wird.

Durch einen aktiven Kurzschluss, d.h. durch Schliessen aller oberen Schalter S1..S3 oder aller unteren Schalter S4..S6 kann nun ein sicherer Zustand herbeigeführt werden, bei dem hohe Spannungen UC im Zwischenkreis verhindert und Bremsmomente M reduziert werden.

Dabei wird:
- die Synchronmaschine 1 im passiven Generatorbetrieb durch Öffnen aller Schalter S1..S6 des Umrichters 2 betrieben,
- der Zwischenkreiskondensator C bis zu einem ersten Schwellwert UC1 einer Spannung im Zwischenkreis UC aufgeladen,
- elektrische Verbraucher des Fahrzeugs mit elektrischer Energie aus dem Zwischenkreiskondensator C versorgt,
- Wicklungen der Synchronmaschine 1 oberhalb eines zweiten höheren Schwellwerts UC2 durch automatisches Schliessen aller unteren Schalter S4..S6 (wie in Fig. 1 gezeigt) oder aller oberen Schalter S1..S3 des Umrichters 2 durch die Spannung im Zwischenkreis UC kurzgeschlossen und
- der aktive Kurzschluss nach Unterschreiten des ersten Schwellwerts UC1 durch Öffnen der geschlossenen Schalter S1..S6 automatisch wieder gelöst.

In einer vorteilhaften Variante der Erfindung wird der Kurzschluss der Wicklungen der Drehstrommaschine 1 unterhalb eines dritten Schwellwertes UC3 aufgehoben, welcher unterhalb des ersten Schwellwertes UC1 liegt. Vorteilhaft wird als erster Schwellwert UC1 der Zwischenkreisspannung UC 40 Volt, als zweiter Schwellwert UC2 der Zwischenkreisspannung UC 60 Volt und als dritter Schwellwert UC3 der Zwischenkreisspannung UC 20 Volt vorgesehen. Dieser Betriebsfall ist in Fig. 2 dargestellt.

Sobald die Drehstrom-Synchronmaschine 1 über die Antriebsachse des Fahrzeugs angetrieben wird (generatorischer Betrieb), wird über Rekuperation Energie in den Zwischenkreis gepumpt, und der Kondensator C wird aufgeladen. Wenn die Spannung die 40V-Schwelle überschreitet, läuft die interne Speisung an. Nach einer systembedingten Totzeit werden die unteren Schalter S4, S5, S6 des Umrichters 2 betätigt (siehe dazu die von einer erfindungsgemäßen Steuerung - nicht dargestellt - angelegte Steuerspannung UG), und ein aktiver Kurzschluss wird eingeleitet. Dies geschieht, bevor die 60V Schwelle erreicht wird. Die im Kondensator C gespeicherte Energie wird dann über die internen und externen Verbraucher so lange entladen bis die 20V-Schwelle unterschritten wird. Ab diesem Zeitpunkt enthält der Zwischenkries nicht mehr genug Energie, um die Treiber für die Schalter S1..S6 zu versorgen, und der aktive Kurzschluss wird unterbrochen. Die unteren Schalter S4..S6 gehen auf, und über die zu den Schaltern S1..S6 antiparallel geschalteten Dioden wird wieder Energie über "passives Überströmen" in den Zwischenkreis gepumpt. D.h. es wird ein periodischer Kurzschluss generiert, dessen Frequenz sich über interne und externe Verbraucher, Systemkapazität und Motortyp ergibt. Beispielsweise können so Schaltelemente S1..S6 des Umrichters 2, eine Kühleinrichtung des Umrichters 2, eine Beleuchtungseinrichtung des Fahrzeugs, ein Lenkkraftverstärker und/oder ein Bremskraftverstärker mit Energie versorgt werden.

Das Bremsmoment M pulsiert entsprechend der Belastung der Drehstrom-Synchronmaschine 1, wird im Mittel jedoch klein gehalten.

In Fig. 1 sind hierzu die Stromflüsse eingetragen. Die punktierte Linie symbolisiert das Aufladen des Kondensators C bei geöffneten Schaltern S4..S6, die strichpunktierte Linie den Kurzschluss der Schalter S4..S6.

Im gezeigten Beispiel werden die Wicklungen der Synchronmaschine 1 gegen ein Massepotential kurzgeschlossen, denkbar ist aber auch, dass die Wicklungen gegen ein anderes Potential kurzgeschlossen werden. Weiterhin ist es möglich, dass ein Stator der Synchronmaschine 1 permanenterregt oder durch eine gesonderte Energiequelle fremderregt ist und Wicklungen eines Rotors kurzgeschlossen werden. Umgekehrt ist aber auch denkbar, dass ein Rotor der Synchronmaschine 1 permanenterregt oder durch eine gesonderte Energiequelle fremderregt ist und Wicklungen eines Stators kurzgeschlossen werden.

Abschliessend wird angemerkt, dass die aufgezeigten Varianten nur einen Ausschnitt aus den vielen Möglichkeiten für ein erfindungsgemässes Verfahren zum Bereitstellen elektrischer Energie aus einer angetriebenen Drehstrom-Synchronmaschine 1 beziehungsweise einer Steuerung hierfür darstellen, und nicht dazu herangezogen werden dürfen, den Anwendungsbereich der Erfindung zu limitieren. Für den Fachmann sollte es ein Leichtes sein, die Erfindung basierend auf den hier dargestellten Überlegungen an seine Bedürfnisse anzupassen, ohne dabei den Schutzbereich der Erfindung zu verlassen. Darüber hinaus wird darauf hingewiesen, dass Teile der in den Figuren dargestellten Vorrichtungen auch die Basis für unabhängige Erfindungen bilden können.

### Bezugszeichenliste

- 1: Drehstrom-Synchronmaschine
- 2: mehrphasiger Umrichter
- 3: Fahrzeugnetz
- C: Kondensator
- M: Bremsmoment
- S1..S6: Schalter (z.B. FETs oder IGBTs)
- t: Zeit
- UC: Zwischenkreisspannung
- UC1..UC3: Schwellwerte der Zwischenkreisspannung
- UG: Steuerspannung

## Patentansprüche

1. Verfahren zum Bereitstellen elektrischer Energie aus einer angetriebenen Drehstrom-Synchronmaschine (1) mit einem mehrphasigen Umrichter (2), der obere Schalter (S1..S3) und untere Schalter (S4..S6) umfasst, zum Antrieb eines Fahrzeugs während und zum Herbeiführen eines sicheren Zustands, der durch die Verhinderung hoher Spannungen und die Reduktion des Bremsmoments (M) durch aktiven Kurzschluss infolge Schliessens aller oberen Schalter (S1..S3) oder aller unteren Schalter (S4..S6) herbeigeführt wurde, z.B. bei einem abgeschleppten Kraftfahrzeug oder bei einem Fahrzeug, das fremd (hybrid oder am Rollenprüfstand) angetrieben wird oder ausrollt und/oder über keine einsatzfähige Zwischenkreisspannungsversorgung verfügt, und wenigstens einen in oder an einem Zwischenkreis des Umrichters (2) angeordneten Zwischenkreis-Kondensator (C) umfasst, **gekennzeichnet durch** die Schritte:
- Betreiben der Synchronmaschine (1) im passiven Generatorbetrieb **durch** Öffnen aller Schalter (S1..S6) des Umrichters (2),
- Aufladen des Zwischenkreiskondensators (C) bis zu einem ersten Schwellwert (UC1) einer Spannung im
Zwischenkreis (UC),
- Versorgen von elektrischen Verbrauchern des Fahrzeugs mit elektrischer Energie aus dem
Zwischenkreiskondensator (C),
- Kurzschließen von Wicklungen der Synchronmaschine (1) oberhalb eines zweiten höheren Schwellwerts (UC2) **durch** automatisches Schliessen aller unteren Schalter (S4..S6) oder aller oberen Schalter (S1..S3) des Umrichters (2) **durch** die Spannung im Zwischenkreis (UC) und
- automatisches Lösen des aktiven Kurzschlusses nach Unterschreiten des ersten Schwellwerts (UC1) **durch** Öffnen der geschlossenen Schalter (S1..S6).

2. Verfahren nach Anspruch 1, **dadurch gekennzeichnet, dass** der Kurzschluss der Wicklungen der Drehstrommaschine (1) unterhalb eines dritten Schwellwertes (UC3) aufgehoben wird, welcher unterhalb des ersten Schwellwertes (UC1) liegt.

3. Verfahren nach Anspruch 1 oder 2, **dadurch gekennzeichnet, dass** die Wicklungen der Synchronmaschine (1) gegen ein Massepotential kurzgeschlossen werden.

4. Verfahren nach einem der Ansprüche 1 bis 3, **dadurch gekennzeichnet, dass** ein Stator der Synchronmaschine (1) permanenterregt oder durch eine gesonderte Energiequelle fremderregt ist und Wicklungen eines Rotors kurzgeschlossen werden.

5. Verfahren nach einem der Ansprüche 1 bis 3, **dadurch gekennzeichnet, dass** ein Rotor der Synchronmaschine (1) permanenterregt oder durch eine gesonderte Energiequelle fremderregt ist und Wicklungen eines Stators kurzgeschlossen werden.

6. Verfahren nach einem der Ansprüche 1 bis 5, **dadurch gekennzeichnet, dass** als Verbraucher des Kraftfahrzeugs einer oder mehrere aus der Gruppe: Schaltelemente (S1..S6) des Umrichters (2), eine Kühleinrichtung des Umrichters (2), eine Beleuchtungseinrichtung des Fahrzeugs, ein Lenkkraftverstärker und/oder ein Bremskraftverstärker vorgesehen ist/sind.

7. Verfahren nach einem der Ansprüche 1 bis 6, **dadurch gekennzeichnet, dass** ein Akkumulator zum Betrieb des Kraftfahrzeugs von einem elektrischen Netz des Fahrzeugs getrennt wird.

8. Verfahren nach einem der Ansprüche 1 bis 7, **dadurch gekennzeichnet, dass** als erster Schwellwert (UC1) der Zwischenkreisspannung (UC) 40 Volt und/oder als zweiter Schwellwert (UC2) der Zwischenkreisspannung (UC) 60 Volt und/oder als dritter Schwellwert (UC3) der Zwischenkreisspannung (UC) 20 Volt vorgesehen werden.

9. Steuerung für einen mehrphasigen Umrichter (2), der obere Schalter (S1..S3) und untere Schalter (S4..S6) sowie wenigstens einen in einem Zwischenkreis des Umrichters (2) angeordneten Kondensator (C) umfasst und an den eine Drehstrom-Synchronmaschine (1) zum Antrieb eines Fahrzeugs angeschlossen ist und der einen in einem Zwischenkreis des Umrichters (1) angeordneten Kondensator (C) umfasst, **dadurch gekennzeichnet, dass** die Steuerung zum Ansteuern des Umrichters (1) vorgesehen ist derart, dass
elektrische Energie aus der angetriebenen Drehstrom-Synchronmaschine (1) während und zum Herbeiführen eines sicheren Zustands, der durch die Verhinderung hoher Spannungen und die Reduktion des Bremsmoments (M) durch aktiven Kurzschluss infolge Schliessens aller oberen Schalter (S1..S3) oder aller unteren Schalter (S4..S6) herbeigeführt wurde, z.B. bei einem abgeschleppten Kraftfahrzeug oder bei einem Fahrzeug, das fremd (hybrid oder am Rollenprüfstand) angetrieben wird oder ausrollt und/oder über keine einsatzfähige Zwischenkreisspannungsversorgung verfügt, gewonnen wird,
**dadurch gekennzeichnet, dass**
- die Synchronmaschine (1) im passiven Generatorbetrieb durch Öffnen aller Schalter (S1..S6) des Umrichters (2) betrieben wird,
- der Zwischenkreiskondensator (C) bis zu einem ersten Schwellwert (UC1) einer Spannung im Zwischenkreis (UC) aufgeladen wird,
- elektrische Verbraucher des Fahrzeugs mit elektrischer Energie aus dem Zwischenkreiskondensator (C) versorgt werden,
- Wicklungen der Synchronmaschine (1) oberhalb eines zweiten höheren Schwellwerts (UC2) durch automatisches Schliessen aller unteren Schalter (S4..S6) oder aller oberen Schalter (S1..S3) des Umrichters (2) durch die Spannung im Zwischenkreis (UC) kurzgeschlossen werden und
- der aktive Kurzschluss nach Unterschreiten des ersten Schwellwerts (UC1) durch Öffnen der geschlossenen Schalter (S1..S6) automatisch gelöst wird.
